# EUROPÄISCHE PATENTSCHRIFT

(11) **EP 4 117 802 B1**
(45) Veröffentlichungstag und Bekanntmachung des Hinweises auf die Patenterteilung: **08.05.2024**
(21) Anmeldenummer: 21710179.9
(22) Anmeldetag: 19.02.2021
(51) Int. Cl.: B01D 45/08

(54) **ABSCHEIDER ZUR TRENNUNG EINES FÖRDERMEDIUMS, VORZUGSWEISE LUFT, VON EINEM FÖRDERGUT UND VERFAHREN ZUM ABSCHEIDEN VON FÖRDERGUT AUS EINEM FÖRDERMEDIUM-FÖRDERGUT-GEMISCH**
SEPARATOR FOR SEPARATING A CONVEYED MEDIUM, PREFERABLY AIR, FROM A CONVEYED MATERIAL, AND METHOD FOR SEPARATING CONVEYED MATERIAL FROM A CONVEYED MEDIUM/CONVEYED MATERIAL MIXTURE
SÉPARATEUR POUR SÉPARER UN MILIEU TRANSPORTÉ, DE PRÉFÉRENCE DE L'AIR, D'UN MATÉRIAU TRANSPORTÉ, ET PROCÉDÉ POUR SÉPARER UN MATÉRIAU TRANSPORTÉ D'UN MÉLANGE MILIEU TRANSPORTÉ/MATÉRIAU TRANSPORTÉ

(30) Priorität: 11.03.2020 DE 102020001716
(43) Veröffentlichungstag der Anmeldung: 18.01.2023
(73) Patentinhaber: Kramer, Walter, 6333 Hünenberg See (CH)
(72) Erfinder: Kramer, Walter, 6333 Hünenberg See (CH)
(74) Vertreter: Jackisch-Kohl, Anna-Katharina
(86) Internationale Anmeldenummer: PCT/EP2021/000018
(87) Internationale Veröffentlichungsnummer: WO 2021/180356

(56) Entgegenhaltungen:
- CN-U- 201 791 432
- CN-U- 203 678 144
- CN-U- 205 867 794
- JP-A- 2009 202 142

## Beschreibung

Die Erfindung betrifft einen Abscheider zur Trennung eines Fördermediums, vorzugsweise Luft, von einem Fördergut nach dem Oberbegriff des Anspruches 1.

Abscheider werden in Fördersystemen eingesetzt, mit denen Fördergut, beispielsweise Kunststoffgranulat, von Silos und dergleichen über Förderleitungen einer Verarbeitungsmaschine zugeführt werden. Die Zuführung kann im Saug- oder auch im Druckprozess erfolgen. Das Fördergut wird mittels des Fördermediums, das in der Regel Luft ist, vom jeweiligen Silo über die Förderleitungen zur Verarbeitungsmaschine oder einem anderen Empfänger gefördert. Der Abscheider hat die Aufgabe, das Fördergut vom Fördermedium zu trennen.

Bei einer Saugförderung hat der Abscheider ein Filter bzw. Sieb, durch welches das Fördermedium hindurchtreten, das Fördergut jedoch zurückgehalten wird. Die Trennung von Fördermedium und Fördergut bei einer Saugförderung kann auch mittels einer Zyklonwirkung erzielt werden, bei der die Zuleitung tangential in ein Gehäuse des Abscheiders vorgesehen ist.

Bei der Druckförderung von Fördergut ist der Abscheider als Zyklon ausgebildet, um durch Zyklonwirkung das Fördergut vom Fördermedium zu trennen.

Bei Einsatz in der Kunststoffindustrie werden für kleine und mittlere Leistungen üblicherweise Saugfördersysteme eingesetzt. Typisch hierbei ist die Beschickung von Maschinentrichtern, Trocknungstrichtern und Behältern von Dosier- und/oder Mischgeräten.

Druckfördersysteme werden für mittlere (etwa 1000 kg/h) bis große Leistungen eingesetzt. Typisch ist hierbei die Beschickung von Lagersilos (meistens durch Tankwagen), Tagessilos oder große Verarbeitungsmaschinen mit hohem Stundendurchsatz.

Häufig werden sogenannte gefüllte Kunststoffe (zum Beispiel Glasfasern) mit einer zu hohen Fördergeschwindigkeit gefördert. Dies führt, insbesondere bei einer zyklonartigen Abscheidung, zu einer starken Abrasion an entsprechenden Stellen der Leitungen. Es werden vermehrt Kunststoffgranulate mit Glasfaseranteilen eingesetzt, die bis zu 40 % betragen können. Wenn diese Kunststoffgranulate mit zu hohen Luftgeschwindigkeiten größer etwa 30m/s gefördert werden, sind die Abrasionsschäden an Leitungsabschnitten teilweise enorm. Selbst wenn hochwertige Materialien eingesetzt werden, wie teure Keramik- oder Glaseinsätze, verschleißen diese sehr rasch.

Es ist ein Abscheider bekannt (CN 201 791 432 U), bei dem der Zuleitung für das Fördermedium-Fördergut-Gemisch eine Prallwand mit Abstand gegenüberliegt. Das Fördergut prallt an der Prallwand ab und fällt nach unten, während das Fördermedium über einen Ausgang aus dem Behälter austritt. Die Prallwand wird durch Abrasion beschädigt, selbst wenn hochwertige Materialien für die Prallwand eingesetzt werden.

Bei einem anderen bekannten Abscheider (CN 203 678 144 U) ist an der Innenseite des Behälters eine Prallplatte vorgesehen, auf die das Fördergut des Fördermedium-Fördergut-Gemisches prallt und nach unten fällt. Die Prallplatte ist darum einem hohen Verschleiß ausgesetzt.

Auch bei weiteren bekannten Abscheidern (JP 2009-20142 A und CN 205 867 794 U) ist eine Prallplatte vorgesehen, auf die das Fördergut trifft, wodurch die Prallplatte einem hohen Verschleiß ausgesetzt ist.

Der Erfindung liegt die Aufgabe zugrunde, den gattungsgemäßen Abscheider so auszubilden, dass auch bei hohen Fördergeschwindigkeiten Abrasionsschäden vermieden oder allenfalls nur in geringem Maße auftreten, wobei dennoch eine zuverlässige Trennung von Fördermedium und Fördergut sichergestellt ist.

Diese Aufgabe wird beim gattungsgemäßen Abscheider erfindungsgemäß mit den kennzeichnenden Merkmalen des Anspruches 1.

Der erfindungsgemäße Abscheider hat die Prallwand, die sich im Gehäuse befindet und dem Auslassende der Zuleitung in Zuströmrichtung des Gemisches aus Fördermedium und Fördergut mit Abstand gegenüberliegt. Die Prallwand schließt winklig an eine Deckwand an, die den Zuströmweg des Fördermedium-Fördergut-Gemisches gegen den Ausgang für das Fördermedium abdeckt. Das über die Zuleitung in den Behälter geförderte Fördergut trifft auf die Prallwand, wodurch die kinetische Energie des Fördergutes vernichtet wird. Das Fördermedium selbst verringert seine Geschwindigkeit nach dem Austritt aus dem Auslassende der Zuleitung sehr rasch, so dass es zum Ausgang strömen kann. Die Geschwindigkeit des Fördermediums ist hierbei so gering, dass das Fördermedium kein Fördergut mitreißen kann.

Im Bereich zwischen der Prallwand und der Deckwand bildet sich ein Fördergutpolster, das den Bereich der Prallwand abdeckt, auf den das Fördergut trifft. Das sich so bildende Fördergutpolster deckt die Prallwand in diesem Bereich ab, so dass das Fördergut nicht mehr auf die Prallwand trifft, so dass keine oder allenfalls nur vernachlässigbare Abrasionsschäden auftreten.

Die Prallwand ist Teil eines Abscheideschuhes, der einen Trennraum für das Gemisch aus Fördermedium und Fördergut aufweist. Dieser Trennraum ist in Zuströmrichtung des Gemisches durch die Prallwand begrenzt.

An die Prallwand schließen Seitenwände an, die den Trennraum seitlich begrenzen. Dadurch wird sichergestellt, dass das über die Zuleitung geförderte Gemisch aus Fördermedium und Fördergut nicht an der Prallwand vorbei strömen kann. Die Seitenwände könne als seitliche Führungen für das Fördermedium-Fördergut-Gemisch dienen, um es auf die Prallwand zu leiten.

Der Trennraum ist an der der Prallwand gegenüberliegenden Seite durch wenigstens eine Querwand begrenzt, die an die Zuleitung anschließt. Somit ergibt sich ein Abscheideschuh, bei dem der Trennraum von der Prallwand, der Deckwand, den Seitenwänden und der Querwand begrenzt ist. Das über die Zuleitung eintretende Gemisch aus Fördermedium und Fördergut gelangt in diesen Trennraum, wodurch durch die verschiedenen Wände gewährleistet ist, dass das gesamte Schüttgut, das aus der Zuleitung zuströmt, auf die Prallwand gelangt. Der Abscheideschuh ist auf der der Deckwand gegenüberliegenden Seite nach unten offen, so dass das Fördermedium sowie das Fördergut aus dem Trennraum gelangen können.

Vorteilhaft verläuft die Zuleitung radial zum Gehäuse. Dadurch wird gewährleistet, dass das Fördergut zuverlässig beim Eintritt in das Gehäuse auf die Prallwand trifft.

Um die Bildung eines Fördergutpolsters an der Prallwand zu erleichtern, ist die Prallwand in vorteilhafter Weise mit einem abgewinkelten Endabschnitt versehen, der sich schräg in Richtung auf den Auslass des Gehäuses erstreckt. Der abgewinkelte Endabschnitt wirkt als zusätzliche Bremse für das an der Prallwand sich bildende Fördergutpolster. Es rutscht daher während des Fördervorganges nicht von der Prallwand nach unten ab, sondern bleibt in seiner die Prallwand abdeckenden Position.

Vorteilhaft verläuft die Prallwand in Umfangsrichtung des Gehäuses gekrümmt, vorzugsweise etwa halbkreisförmig.

Vorteilhaft schließt die Deckwand den Trennraum gegen den Ausgang für das Fördermedium ab. Es strömt daher nach unten aus dem Trennraum des Abscheideschuhes heraus. Auch das Fördergut kann somit nach unten aus dem Trennraum in das Gehäuse fallen.

Der Auslass des Gehäuses ist vorteilhaft mit einem Auslassventil versehen, mit dem der Auslass je nach gewünschter Funktion des Abscheiders geöffnet oder geschlossen werden kann.

Vorteilhaft ist auch der Ausgang mit einem Abluftventil versehen, mit dem der Ausgang wahlweise geöffnet oder geschlossen werden kann. Während des Fördervorganges wird das Abluftventil geöffnet, so dass das Fördermedium nach dem Eintritt in das Gehäuse über den Ausgang aus dem Gehäuse herausgeführt wird.

Der erfindungsgemäße Abscheider ist vorteilhaft eine Einheit, die beispielsweise an eine Verarbeitungsmaschine für das Fördergut angeschlossen werden kann.

Damit das Fördermedium in einfacher Weise zum Ausgang des Gehäuses gelangen kann, befindet sich zwischen der Deckwand und der Innenwand des Gehäuses wenigstens ein Durchtrittsraum für das Fördermedium,der in Richtung auf den Ausgang für das Fördermedium offen ist.

Die Erfindung wird anhand eines in der Zeichnung dargestellten Ausführungsbeispieles näher erläutert. Es zeigen
- Fig. 1: in Seitenansicht einen erfindungsgemäßen Abscheider,
- Fig. 2: eine Draufsicht auf den Abscheider gemäß Fig. 1,
- Fig. 3: einen Schnitt längs der Linie A-A in Fig. 1,
- Fig. 4: einen Schnitt längs der Linie B-B in Fig. 3,
- Fig. 5: einen Schnitt längs der Linie C-C in Fig. 4,
- Fig. 6: einen Schnitt längs der Linie D-D in Fig. 4.

Der Abscheider hat ein zylindrisches Gehäuse 1, in das nahe einer Gehäusedecke 2 eine Zuleitung 3 mündet, über die ein Fördergut 4 zugeführt wird. Das Fördergut 4 wird pneumatisch mittels Saug- oder Druckförderung dem Abscheider zugeführt. Das Fördergut kann beispielsweise Schüttgut, Granulat, rieselfähiges Pulver und dergleichen sein.

Das Gehäuse 1 verjüngt sich im unteren Bereich 5 trichterförmig und weist am freien Ende einen Auslassstutzen 6 auf, der durch ein Auslassventil 7 geschlossen werden kann.

In der Decke 2 des Gehäuses 1 befindet sich ein Abluftstutzen 8, der durch ein Abluftventil 9 geschlossen werden kann.

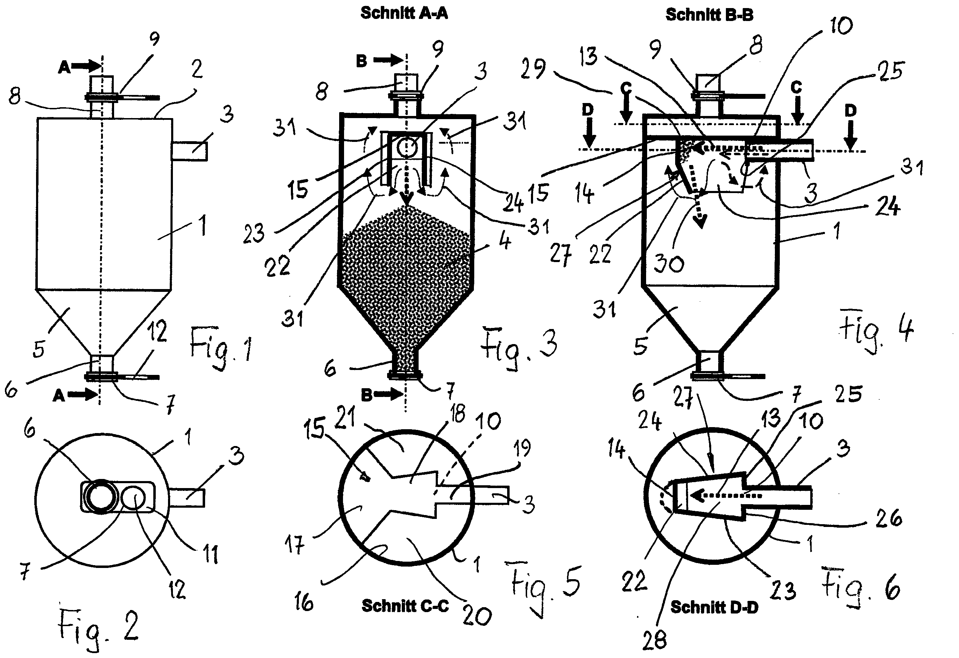

Die Zuleitung 3 mündet nahe der Decke 2 radial in das Gehäuse 1. Wie Fig. 4 zeigt, hat der innerhalb des Gehäuses 1 liegende Teil der Zuleitung 3 eine Länge, die kleiner ist als der Radius des Gehäuses 1.

In Draufsicht auf das Gehäuse 1 gesehen, liegt der Abluftstutzen 8 mit radialem Abstand neben dem Auslassende 10 der Zuleitung 3.

Der Abscheider sitzt in bekannter Weise auf einer Verarbeitungsmaschine, mit der das Fördergut 4 verarbeitet werden kann.

Im dargestellten und beschriebenen Ausführungsbeispiel wird das Fördergut 4 im Gehäuse 1 zunächst gesammelt, indem mit dem Auslassventil 7 der Auslassstutzen 6 geschlossen wird. Das Auslassventil 7 hat einen Schieber 11, der eine Durchlassöffnung 12 aufweist (Fig. 2). In der Stellung gemäß den Fig. 1 und 2 schließt der Schieber 11 den Auslassstutzen 6, so dass das Fördergut 4 nicht nach unten aus dem Gehäuse 1 gelangen kann.

Wird das Fördergut 4 über die Zuleitung 3 in das Gehäuse 1 gefördert, ist das Auslassventil 7 geschlossen und das Abluftventil 9 geöffnet. Dadurch kann die Förderluft, mit der das Fördergut 4 in das Gehäuse 1 transportiert wird, nach oben durch den Abluftstutzen 8 abströmen.

Fig. 4 zeigt den Abscheider während des Fördervorganges. Das Fördergut mit der Luft wird in Richtung des Strömungspfeiles 13 über die Zuleitung 3 in das Gehäuse 1 gefördert. In Strömungsrichtung mit Abstand vor dem Auslassende 10 der Zuleitung 3 befindet sich eine quer zur Strömungsrichtung 13 liegende Wand 14, auf die das Fördergut 4 und die Luft treffen. Die Wand 14 steht quer, vorzugsweise senkrecht, von einer Deckplatte 15 ab, die mit geringem Abstand unterhalb der Decke 2 im Gehäuse 1 befestigt ist. Die Deckplatte 15 liegt parallel zur Decke 2 und schließt der Zuleitung 3 diametral gegenüberliegend an die Innenwand 16 des Gehäuses 1 an. Im dargestellten Ausführungsbeispiel verläuft die Wand 14, in Achsrichtung des Gehäuses 1 gesehen (Fig. 6), gerade. Vorteilhaft ist es, wenn die Wand 14 zumindest annähernd halbrund ausgebildet ist, in Achsrichtung des Gehäuses 1 gesehen. Diese Form der Wand 14 ist in Fig. 6 durch eine gestrichelte Linie dargestellt.

Wie aus Fig. 5 hervorgeht, hat die Deckplatte 15 einen kreissektorförmigen Abschnitt 17, der sich über einen Winkelbereich von etwa 90° erstreckt und der mit seinem gekrümmten Rand an der Gehäuseinnenseite 16 befestigt ist. Mit Abstand von der Gehäuseinnenwand 16 geht der Abschnitt 17 in einen Abschnitt 18 über, der sich in Richtung auf die Zuleitung 3 in der Breite stetig verbreitert. Mit Abstand von der Gehäuseinnenwand 16 schließt der Abschnitt 18 an einen radial verlaufenden Abschnitt 19 an, der sich bis zur Innenwand 16 des Gehäuses 1 erstreckt und den innerhalb des Gehäuses 1 befindlichen Teil der Zuleitung 3 abdeckt. Sie ist in geeigneter Weise an der Unterseite dieses Abschnittes befestigt.

Der Abschnitt 18 endet mit Abstand vor der Gehäuseinnenwand 16. Zwischen der Deckplatte 15 und der Gehäuseinnenwand 16 werden Durchtrittsräume 20, 21 für die Luft gebildet, über welche die Luft zum Abluftstutzen 8 strömen kann.

Die Wand 14 steht von der dem Auslassstutzen 6 zugewandten Seite der Deckplatte 15 ab. Sie hat mit Abstand von der Deckplatte 15 einen schräg zu ihr verlaufenden Endabschnitt 22 (Fig. 4), der schräg nach unten und entgegen der Strömungsrichtung 13 verläuft. Die Wand 14 mit dem Endabschnitt 22 verbindet zwei Seitenwände 23, 24 miteinander, die von der Wand 14 aus in Richtung auf die Zuleitung 3 divergierend verlaufen (Fig. 6). In Höhe des Auslassendes 10 der Zuleitung 3 gehen die Seitenwände 23, 24 in Querwände 25, 26 über, die rechtwinklig in Höhe des Auslassendes 10 an die Zuleitung 3 anschließen. Die Querwände 25, 26 haben nur eine solche Höhe, dass die Zuleitung 3 an ihrem Auslassende 10 mit den Querwänden 25, 26 verbunden werden kann. Die Seitenwände 23, 24 sowie die Wand 14, die gleiche Höhe haben, überragen die Querwände 25, 26 in Richtung auf den Auslassstutzen 6.

Abweichend vom dargestellten Ausführungsbeispiel kann die Deckplatte 15 auch so ausgebildet sein, dass sie in Höhe des Auslassendes 10 der Zuleitung 3 endet. An diesem Ende schließt an die Deckplatte 15 eine Querwand an, die von der Deckplatte 15 quer, vorzugsweise senkrecht, nach unten absteht. Die Querwand ist mit einer Öffnung versehen, an die die Zuleitung 3 innerhalb des Gehäuses 1 angeschlossen ist.

Die Deckplatte 15 mit der Wand 14, 22, den Seitenwänden 23, 24 und den Querwänden 25, 26 bildet einen Abscheideschuh 27, der dafür sorgt, dass innerhalb des Gehäuses 1 das Fördergut 4 zuverlässig von der Luft getrennt werden kann.

Die Wand 14, 22, die Deckwand 15, die Seitenwände 23, 24 und die Querwände 25, 26 bilden einen Trennraum 28, in dem die Trennung des Fördergutes 4 von der Luft stattfindet.

Die Wände 4, 22 bis 26 haben einen ausreichend großen Abstand vom Auslassstutzen 6, so dass im Gehäuse 1 eine entsprechend große Menge an Schüttgut gelagert werden kann (Fig. 3).

Die Seitenwände 23, 24 können am unteren Rand im Bereich der Zuleitung 3 in Richtung zueinander gerundet ausgebildet sein. Diese Gestaltung hat den Vorteil, dass mehr Förderluft zum Abluftstutzen 8 strömt.

Der Abscheideschuh 27 ist in Richtung auf den Auslassstutzen 6 offen, so dass sowohl das Fördergut 4 als auch die über die Zuleitung 3 einströmende Luft zuverlässig aus dem Trennraum 28 des Abscheideschuhs 27 austreten können.

Über die Zuleitung 3 tritt das Fördergut-Luft-Gemisch in den Trennraum 28 des Abscheideschuhs 27 mit der maximalen Luftgeschwindigkeit ein. Das Fördergut 4 sowie auch die Luft treffen auf die in Strömungsrichtung 13 vor der Zuleitung 3 liegende Wand 14, die eine Prallwand bildet, an welcher die kinetische Energie, die das Fördergut 4 hat, vernichtet wird. Das Fördergut 4 prallt mit hoher kinetischer Energie nahezu senkrecht auf die Wand 4. Im Eckbereich zwischen der Wand 4 und der Deckplatte 14 bildet sich im Trennraum 28 ein Polster 29 (Fig. 4), das durch einen Teil des Fördergutes 4 gebildet wird. Aufgrund des über die Zuleitung 3 ständig während des Fördervorganges nachströmenden Fördergutes bleibt das Polster 29 in diesem Bereich hängen. Die Dicke des Polsters 29 hängt vom Schüttgewicht des Fördergutes 4 und der Luftgeschwindigkeit ab, durch welche auch die Geschwindigkeit des Fördergutes 4 bestimmt wird. Die durch das nachströmende Fördergut 4 auf das Polster 29 wirkende Kraft ist größer als die Gravitationskraft des Polsters 29, das daher während des Fördervorganges im Trennraum 28 hängen bleibt. Erst wenn der Fördervorgang gestoppt wird und kein Fördergut-Luft-Gemisch über die Zuleitung 3 in das Gehäuse 1 gelangt, fällt das Polster 29 infolge seiner Schwerkraft nach unten in das Gehäuse 1. Dies ist durch den Pfeil 30 in Fig. 4 kenntlich gemacht.

Die Bildung des Polsters 29 wird vorteilhaft begünstigt, wenn die Wand 14 gekrümmt, vorzugsweise etwa halbrund gestaltet ist.

Beim Eintritt der Luft in den Trennraum 28 des Abscheidesschuhs 27 nimmt die Luftgeschwindigkeit aufgrund des im Vergleich zur Zuleitung 3 größeren Expansionsraumes im Abscheideschuh 27 rasch ab, so dass die Luft aus dem Trennraum 28 in Richtung der Strömungspfeile 31 nach oben durch die Durchtrittsräume 20, 21 nach oben zum Abluftstutzen 8 strömen kann.

Während des beschriebenen Füllvorganges ist das Auslassventil 7 geschlossen, während das Abluftventil 9 geöffnet ist. Sobald der Fördervorgang abgeschlossen ist, kann das Abluftventil 9 geschlossen werden.

Die Bildung des Polsters 29 wird dadurch begünstigt, dass an die Wand 14 der abgewinkelte Endabschnitt 22 anschließt, der entgegen der Strömungsrichtung 13 geneigt angeordnet ist. Er wirkt als zusätzliche Sicherheit dafür, dass das Polster 29, solange das Gehäuse 1 mit Fördergut 4 gefüllt wird, nicht nach unten rutscht. Das Polster 29 bildet einen Abrasionsschutz, durch den verhindert wird, dass die Wand 14 durch den Aufprall des Fördergutes 4 frühzeitig verschleißt.

Die Wand 14 kann über ihre Umfangslänge gerade, aber auch gekrümmt ausgebildet sein.

Die aus dem Trennraum 28 des Abscheideschuhs 27 austretende Luft hat nur noch geringe Geschwindigkeit, so dass sie, wenn sie vom Abluftstutzen 8 aus angesaugt wird, kein Fördergut 4 mitreißen kann. Im Bereich der Durchtrittsräume 20, 21 hat die Luft ihre minimale Strömungsgeschwindigkeit.

Um das im Gehäuse 1 befindliche Fördergut 4 einer nachfolgenden Verarbeitungsmaschine zuzuführen, wird das Auslassventil 7 geöffnet, so dass das Fördergut 4 nach unten herausfallen kann. Anschließend wird das Auslassventil 7 wieder geschlossen und ein neuer Fördervorgang gestartet, bei dem das Abluftventil 9 wieder geöffnet ist.

Das Verhältnis der kinetischen Energie der Förderluft zum Fördergut 4 liegt in der Regel bei 1 zu etwa 500 bis 800. Infolge der hohen kinetischen Energie ändert das Fördergut 4 nach dem Austritt aus der Zuleitung 3 seine Richtung und seine Geschwindigkeit infolge der Massenträgheit nur unwesentlich. Die Förderluft hingegen mit ihrer sehr geringen kinetischen Energie verliert beim Eintritt in den Abscheideschuh 7 sehr rasch an Geschwindigkeit, so dass die Förderluft dementsprechend auch ihre Richtung ändern kann. Wie die Strömungspfeile in den Fig. 3 und 4 erkennen lassen, ändert die Förderluft ihre Strömungsrichtung um mindestens 180°. Aufgrund der geringen Geschwindigkeit wird hierbei das Fördergut 4 nicht zum Abluftstutzen 8 mitgerissen.

In der Praxis hat die Förderluft in der Zuleitung 3 eine Geschwindigkeit von 30 m/s. Das Fördergut 4 prallt mit etwa der halben Geschwindigkeit auf die Wand 14, also mit einer hohen kinetischen Energie. Sie ist dafür verantwortlich, dass sich das Polster 29 im Trennraum 28 bildet und dort auch hängen bleibt, bis die Förderung unterbrochen wird.

Im dargestellten und beschriebenen Ausführungsbeispiel ist der Abscheideschuh 27 in das Gehäuse 1 eingebaut. Eine solche Gestaltung des Abscheiders ist insbesondere für einen zyklischen Betrieb im Saug- sowie auch im Druckbereich geeignet. Die Größe des Gehäuses 1 sowie dessen Form ist beliebig, solange die maximale Luftgeschwindigkeit im Bereich der Durchtrittsräume 20, 21 kleiner etwa 8 m/s ist.

Es sind auch Kunststoff-Verarbeitungsmaschinen bekannt, die mit Maschinentrichtern versehen sind, die mit dem jeweiligen Fördergut 4 befüllt werden. Bei solchen Maschinen befindet sich der Abscheideschuh 27 im Maschinentrichter der Maschine. Dann ist ein Auslassventil nicht erforderlich.

Die Verbindung zwischen dem Maschinentrichter und beispielsweise einer Plastifizierschnecke der Maschine ist sowohl bei einer Saug- als auch bei einer Druckförderung stets druckdicht ausgebildet.

Der Abscheideschuh 27 kann auch für den kontinuierlichen Betrieb im Druckbereich eingesetzt werden, also bei einer Druckförderung. Anstelle des Abluftventiles 9 ist hierbei ein im Querschnitt großer Abluftstutzen vorgesehen, der beispielsweise einen Strömungsquerschnitt hat, der bis zum 6fachen des Strömungsquerschnittes der Zuleitung 3 entspricht.

Der beschriebene Abscheider ist für die pneumatische Förderung sowohl im Druck- als auch im Vakuumbereich geeignet. Er kann für kleine und große Förderleistungen eingesetzt werden. Erfolgt die Förderung des Fördergutes 4 mittels Druckluft, dann sind ein Auslass- und ein Abluftventil nicht erforderlich, wenn beispielsweise große Lagersilos mit einer verhältnismäßig großen Abluftöffnung mit dem Fördergut 4 beschickt werden. Aufgrund des Polsters 29 treten keine oder allenfalls nur vernachlässigbare Verschleißerscheinungen durch Abrasion der Wand 14 auf. Der Abscheider benötigt kein großes Bauvolumen. Infolge der beschriebenen Gestaltung mit dem Abscheideschuh 27 ist eine Abscheidung des Fördergutes 4 aus dem Luftstrom auf kleinstem Raum möglich.

Der Abscheider kann als Chargen-Vorrat zum Nachfüllen von Verbrauchern, wie eine Verarbeitungsmaschine, Trocknungstrichter, Mischer und dgl., genutzt werden.

Im Saugbereich, also bei der Vakuumförderung des Fördergutes 4 als wichtigste Anwendung, sind ein Filter oder ein Sieb nicht erforderlich, um die Förderluft vom Fördergut 4 zu trennen. Dadurch ist ein filterloses Saugfördergerät in vorteilhafter Weise einsetzbar.

Das Gehäuse 1 des Abscheiders kann anstelle der vorteilhaften Zylinderform auch andere geeignete Querschnittsformen aufweisen, ohne dass dadurch die beschriebene Trennung von Förderluft und Fördergut 4 mittels des Abscheideschuhs 27 beeinträchtigt ist.

## Patentansprüche

1. Abscheider zur Trennung eines Fördermediums, vorzugsweise Luft, von einem Fördergut (4), mit einem Behälter (1), der wenigstens eine Zuleitung (3) für das Fördermedium-Fördergut-Gemisch, mindestens einen Auslass (6) für das Fördergut (4) und wenigstens einen Ausgang (8) für das Fördermedium aufweist, wobei im Gehäuse (1) dem Auslassende (10) der Zuleitung (3) in Zuströmrichtung (13) des Fördermedium-Fördergut-Gemisches mit Abstand eine Prallwand (14) gegenüberliegt, die winklig an eine Deckwand (15) anschließt, die den Zuströmweg des Fördermedium-Fördergut-Gemisches gegen den Ausgang (8) für das Fördermedium abdeckt, **dadurch gekennzeichnet, dass** die Prallwand (14) Teil eines Abscheideschuhes (27) ist, der einen Trennraum (28) für das Fördermedium-Fördergut-Gemisch aufweist, der in Zuströmrichtung (13) durch die Prallwand (14) begrenzt ist, an die Seitenwände (23, 24) anschließen, die den Trennraum (28) seitlich begrenzen, der an der der Prallwand (14) gegenüberliegenden Seite durch wenigstens eine Querwand (25, 26) begrenzt ist, die an die Zuleitung (3) anschließt.

2. Abscheider nach Anspruch 1,
**dadurch gekennzeichnet, dass** die Zuleitung (3) radial zum Gehäuse (1) verläuft.

3. Abscheider nach Anspruch 1 oder 2,
**dadurch gekennzeichnet, dass** die Prallwand (14) einen in Richtung auf den Auslass (6) abgewinkelten Endabschnitt (22) aufweist.

4. Abscheider nach einem der Ansprüche 1 bis 3,
**dadurch gekennzeichnet, dass** die Deckwand (15) den Trennraum (28) gegen den Ausgang (8) für das Fördermedium abschließt.

5. Abscheider nach einem der Ansprüche 1 bis 4,
**dadurch gekennzeichnet, dass** der Auslass (6) mit einem Auslassventil (7) versehen ist.

6. Abscheider nach einem der Ansprüche 1 bis 5,
**dadurch gekennzeichnet, dass** der Ausgang (8) mit einem Abluftventil (9) versehen ist.

7. Abscheider nach einem der Ansprüche 1 bis 6,
**dadurch gekennzeichnet, dass** der Abscheider eine an eine Verarbeitungsmaschine für das Fördergut (4) anschließbare Einheit ist.

8. Abscheider nach einem der Ansprüche 1 bis 7,
**dadurch gekennzeichnet, dass** zwischen der Deckwand (15) und der Innenwand (16) des Gehäuses (1) wenigstens ein Durchtrittsraum (20, 21) für das Fördermedium vorgesehen ist, der in Richtung auf den Ausgang (8) für das Fördermedium offen ist

9. Verarbeitungsmaschine mit einem Abscheider nach einem der Ansprüche 1 bis 8,
**dadurch gekennzeichnet, dass** der Abscheider ein Maschinentrichter einer Verarbeitungsmaschine für das Fördergut (4) ist.

## Claims

1. A separator for separating a conveyed medium, preferably air, from a conveyed material (4), with a container (1) that has at least one supply line (3) for the conveyed medium-conveyed material- mixture, at least one outlet (6) for the conveyed material (4) and at least one exit (8) for the conveyed medium, wherein a baffle wall (14) is spaced apart opposite the outlet end (10) of the supply line (3) in the inflow direction (13) of the conveyed medium-conveyed material-mixture inside of the housing (1), and angularly connects with a cover wall (15) that covers the inflow path of the conveyed medium-conveyed material-mixture against the exit (8) for the conveyed medium,
**characterized in that** the baffle wall (14) is part of a separator shoe (27) that has a separating space (28) for the conveyed medium-conveyed material-mixture, which is limited in the inflow direction (13) by the baffle wall (14) adjoined by side walls (23, 24) that laterally limit the separating space (28), which is limited on the side opposite the baffle wall (14) by at least one transverse wall (25, 26) that adjoins the supply line (3).

2. Separator according to claim 1,
**characterized in that** the supply line (3) runs radially to the housing (1).

3. Separator according to claim 1 or 2,
**characterized in that** the baffle wall (14) has an end section (22) that is angled in the direction toward the outlet (6).

4. Separator according to one of claims 1 to 3,
**characterized in that** the cover wall (15) seals the separating space (28) against the exit (8) for the conveyed medium.

5. Separator according to one of claims 1 to 4,
**characterized in that** the outlet (6) is provided with an outlet valve (7).

6. Separator according to one of claims 1 to 5,
**characterized in that** the exit (8) is provided with an exhaust valve (9).

7. Separator according to one of claims 1 to 6,
**characterized in that** the separator is a unit that can be connected to a processing machine for the conveyed material (4).

8. Separator according to one of claims 1 to 7,
**characterized in that** at least one passage space (20, 21) for the conveyed medium is provided between the cover wall (15) and the inner wall (16) of the housing (1), and is open in the direction toward the exit (8) for the conveyed medium.

9. A processing machine with a separator according to one of claims 1 to 8,
**characterized in that** the separator is a machine hopper of a processing machine for the conveyed material (4).

## Revendications

1. Séparateur pour séparer un milieu transporté, de préférence de l'air, d'un matériau transporté (4), avec un conteneur (1), qui comporte au moins un conduit d'arrivée (3) pour le mélange milieu transporté-matériau transporté, au moins une évacuation (6) pour le matériau transporté (4) et au moins une sortie (8) pour le milieu transporté, sachant que dans le corps de structure (1) une paroi d'impact (14) est disposée à distance en opposition à l'extrémité d'évacuation (10) du conduit d'arrivée (3) dans la direction de l'écoulement affluant (13) du mélange milieu transporté-matériau transporté, qui se raccorde dans une forme angulaire à une paroi de couverture (15), qui recouvre la voie d'écoulement affluant du mélange milieu transporté-matériau transporté vers la sortie (8) pour le milieu transporté,
**caractérisé en ce que** la paroi d'impact (14) fait partie d'un sabot de séparation (27), qui comporte un espace de séparation (28) pour le mélange milieu transporté-matériau transporté, qui est limité en direction de l'écoulement affluant (13) par la paroi d'impact (14) à laquelle se raccordent les parois latérales (23, 24), qui délimitent latéralement l'espace de séparation (28), qui est limité sur le côté opposé à la paroi d'impact (14) par au moins une paroi transversale (25, 26), qui se raccorde au conduit d'arrivée (3) .

2. Séparateur selon la revendication 1,
**caractérisé en ce que** le conduit d'arrivée (3) passe de façon radiale par rapport au corps de structure (1).

3. Séparateur selon la revendication 1 ou 2,
**caractérisé en ce que** la paroi d'impact (14) comporte une section terminale (22) coudée en direction de l'évacuation (6).

4. Séparateur selon l'une quelconque des revendications 1 à 3,
**caractérisé en ce que** la paroi de couverture (15) ferme l'espace de séparation (28) vers la sortie (8) pour le milieu transporté.

5. Séparateur selon l'une quelconque des revendications 1 à 4,
**caractérisé en ce que** l'évacuation (6) est dotée d'une soupape d'évacuation (7).

6. Séparateur selon l'une quelconque des revendications 1 à 5,
**caractérisé en ce que** la sortie (8) est dotée d'une soupape d'évacuation d'air (9).

7. Séparateur selon l'une quelconque des revendications 1 à 6,
**caractérisé en ce que** le séparateur est une unité raccordable à une machine transformatrice pour le matériau transporté (4).

8. Séparateur selon l'une quelconque des revendications 1 à 7,
**caractérisé en ce qu'**au moins un espace de passage (20, 21) est prévu pour le milieu transporté entre la paroi de couverture (15) et la paroi intérieure (16) du corps de structure (1), qui est ouvert en direction de la sortie (8) pour le milieu transporté.

9. Machine transformatrice avec un séparateur selon l'une quelconque des revendications 1 à 8, **caractérisée en ce que** le séparateur est une trémie de machine d'une machine transformatrice pour le matériau transporté (4).
